# EUROPÄISCHE PATENTSCHRIFT

(11) **EP 3 753 671 B1**
(45) Veröffentlichungstag und Bekanntmachung des Hinweises auf die Patenterteilung: **17.11.2021**
(21) Anmeldenummer: 19180883.1
(22) Anmeldetag: 18.06.2019
(51) Int. Cl.: B23P 19/04, B60J 10/00, B62D 65/02, B62D 65/06

(54) **BEARBEITUNGSVORRICHTUNG**
PROCESSING DEVICE
DISPOSITIF DE TRAITEMENT

(43) Veröffentlichungstag der Anmeldung: 23.12.2020
(73) Patentinhaber: AyTec Automation GmbH, 93098 Mintraching (DE)
(72) Erfinder: RUHLAND, Christian, 93161 Sinzing (DE)
(74) Vertreter: Glück Kritzenberger Patentanwälte PartGmbB

(56) Entgegenhaltungen:
- DE-A1-102009 037 215
- JP-A- S 555 208
- JP-A- H08 324 468
- JP-A- 2003 276 816
- JP-A- 2006 150 174
- KR-B1- 100 802 744
- US-A1- 2004 016 112

## Beschreibung

### Technisches Gebiet

Die vorliegende Erfindung betrifft eine Bearbeitungsvorrichtung zum Bearbeiten eines Kraftfahrzeugteils, welche eine Haltevorrichtung umfasst, die wenigstens zwei voneinander beabstandete Tragstreben enthält, an denen jeweils wenigstens ein Greifer montiert ist. Die Greifer der voneinander beabstandeten Tragstreben weisen aufeinander zu, um zwischen sich ein Kraftfahrzeugteil zu halten. Die Bearbeitungsvorrichtung weist weiterhin wenigstens eine zwischen den Tragstreben angeordnete Bearbeitungsmaschine zum Bearbeiten des Kraftfahrzeugteils auf, insbesondere eine Aufbringvorrichtung zum Aufbringen eines Dichtungsprofils auf das Kraftfahrzeugteil, welches in diesem Fall als Kraftfahrzeugtüre oder Schiebedach ausgebildet ist.

### Stand der Technik

Eine Bearbeitungsvorrichtung dieser gattungsgemäßen Art ist in der DE 10 2009 037 215 A1 gezeigt. Von Nachteil bei dieser Bearbeitungsvorrichtung ist die Tatsache, dass die Tür zum ordnungsgemäßen Greifen durch die Greifer genau zwischen den Tragstreben ausgerichtet werden muss.

### Darstellung der Erfindung

Es ist daher Aufgabe der Erfindung, eine Bearbeitungsvorrichtung der oben genannten Art zu schaffen, die in der Lage ist, ein Kraftfahrzeugteil zuverlässig zu halten, auch wenn dieses nicht exakt zwischen den Tragstreben ausgerichtet ist.

Diese Aufgabe wird durch eine Bearbeitungsvorrichtung mit den Merkmalen des Anspruchs 1 gelöst. Vorteilhafte Weiterbildungen der Erfindung sind Gegenstand der zugeordneten abhängigen Ansprüche.

Erfindungsgemäß weist wenigstens einer der Greifer, vorzugsweise mehrere oder alle Greifer der Haltevorrichtung, wenigstens zwei entlang einer Bewegungsrichtung x unabhängig voneinander betätigbare Halteelemente auf. Diese Bewegungsrichtung x ist vorzugsweise quer zur zugehörigen Tragstrebe des Greifers ausgerichtet, so dass die Bewegung der Greifer und/oder Halteelemente in Bewegungsrichtung x zu einem Greifen bzw. Einspannen des dazwischen liegenden Kraftfahrzeugteils führt. In der Regel werden die Greifer an einem längenverstellbaren Betätigungsarm für die Ausnahme eines Kraftfahrzeugteils vorjustiert, wohingegen das Greifen des Kraftfahrzeugteils durch die Bewegung der Halteelemente der gegenüberliegenden Greifer erfolgt.

Die unabhängig voneinander bewegbaren Halteelemente weisen jeweils eine schräg zur Bewegungsrichtung verlaufende Anlagefläche zur Anlage gegen das Kraftfahrzeugteil auf. Unter der Bezeichnung "schräg" wird ein Winkel β zur Bewegungsrichtung x ungleich 90 Grad verstanden, vorzugsweise von 110 bis 165 Grad. Die Anlageflächen benachbarter Halteelemente sind nebeneinander angeordnet und gegensinnig orientiert wie die beiden Schneiden einer Schere. Auf diese Weise wird zwischen den Anlageflächen benachbarter Halteelemente ein V-förmiger oder konkaver Aufnahmebereich, je nach Form der Anlageflächen, gebildet. Jeder Greifer hat wenigstens zwei Antriebseinheiten zum voneinander unabhängigen Bewegen der nebeneinander angeordneten Halteelemente in Bewegungsrichtung. Hierbei ist jede Antriebseinheit derart ausgebildet bzw. steuerbar, dass die Halteelemente mittels der Anlageflächen mit einer definierten maximalen Kraft gegen das Kraftfahrzeugteil andrückbar sind. Die Anlageflächen können schräg nach vorne oder schräg zurück gewandt verlaufen.

Aufgrund der Tatsache, dass die Anlageflächen der benachbarten Halteelemente gegensinnig geneigt sind, so dass sie einen konkaven oder V-förmigen Aufnahmebereich bilden, kann nun das Halteelement sicher gegriffen werden, egal ob dieses in Querrichtung z zur Bewegungsrichtung x etwas unterschiedlich orientiert ist. Denn unabhängig von der exakten Lage in Querrichtung z fährt jedes Halteelement immer zuverlässig an die Kante des Kraftfahrzeugteils, so dass dieses letztlich in dem V-förmig gebildeten Aufnahmebereich, der durch die beiden Anlageflächen gebildet wird, sicher gehalten wird. Die erfindungsgemäßen Greifer der erfindungsgemäßen Bearbeitungsvorrichtung haben somit eine hohe Toleranz gegenüber einem nicht exakt ausgerichteten Kraftfahrzeugteil, was die Handhabung des Kraftfahrzeugteils und damit letztlich die Bearbeitungsgeschwindigkeit wesentlich erhöht, da keine aufwendigen Ausrichtungsvorgänge stattfinden müssen.

Es ist bereits vorteilhaft, wenn wenigstens einer der Greifer der Haltevorrichtung in der oben beschriebenen erfinderischen Weise ausgebildet ist. Vorzugsweise sind jedoch alle Greifer einer Tragstrebe in dieser Weise ausgebildet, was es erlaubt, eine leichte Verkippung des Kraftfahrzeugteils zwischen den beiden Tragstreben zu kompensieren. Vorzugsweise sind jedoch die (alle) Greifer beider Tragstreben in dieser Weise ausgebildet, was nicht nur eine leichte Verkippung, sondern auch Anordnungstoleranzen des Kraftfahrzeugteils parallel zur Ebene zwischen den beiden Tragstreben erlaubt, d.h. in Querrichtung z des Greifers horizontal und quer zur Bewegungsrichtung x.

Vorzugsweise beträgt der Winkel α zwischen den Anlageflächen benachbarter Halteelemente 45 bis 160 Grad, vorzugsweise 100 bis 150 Grad. Auf diese Weise wird am Haltepunkt des Kraftfahrzeugteils, d.h. am Schnittpunkt zwischen den beiden Anlageflächen ein V-förmiger oder konkaver Aufnahmebereich erzielt, der zum einen das Kraftfahrzeugteil sicher in Querrichtung z festlegt und andererseits verhindert, dass beim Anlegen des ersten Halteelements das Kraftfahrzeugteil durch die Anlagefläche in Querrichtung z ausgelenkt wird, was durchaus passieren kann wenn die Anlagefläche zu schräg ist, d.h. der Winkel zwischen der Ebene zwischen den Tragstreben und der Anlagefläche zu stumpf. Denn es ist zu berücksichtigen, dass die Anlageflächen der wenigstens zwei Halteelemente in der Regel nicht gleichzeitig, sondern auch nacheinander mit dem an das Kraftfahrzeugteil zu liegen kommen. Ein gleichzeitiges Anlegen ist nur dann gegeben, wenn das Kraftfahrzeugteil (in Querrichtung z) exakt mittig zwischen den beiden Anlageflächen aufgenommen ist.

Vorzugsweise ist die gegensinnige Orientierung der Anlageflächen dadurch realisiert, dass sie an einer Ebene E gespiegelt sind, die aufgespannt ist durch die Bewegungsrichtung x und die Richtung y in Richtung der Abfolge der Anlageflächen, welche Ebene E mittig zwischen beiden Anlageflächen angeordnet ist.

Vorzugsweise sind die Anlageflächen der Halteelemente gummiert. Auf diese Weise wird eine ausreichende Friktion zwischen dem Kraftfahrzeugteil und der Anlagefläche realisiert, so dass das Kraftfahrzeugteil beim Kontaktieren der Anlagefläche nicht die Tendenz hat, in Querrichtung z zur Bewegungsrichtung x auszulenken. Den gleichen Effekt hat auch eine vorzugsweise vorgesehene Querriffelung in jeder Anlagefläche. Wenn die Querriffelung mit einer Gummierung kombiniert sind, ist dieser Effekt optimiert und das Kraftfahrzeugteil wird sehr zuverlässig gegriffen, wobei beim Auftreffen einer Anlagefläche vor der anderen Anlagefläche aufgrund der erzielten hohen Friktion keine seitliche Auslenkung des Kraftfahrzeugteils in Querrichtung z zur Bewegungsrichtung x auftritt.

Vorzugsweise enthält die Antriebseinheit des Halteelements einen pneumatischen Antriebszylinder. Der Vorteil dieses Antriebs liegt darin, dass Druckluft für Pneumatikantriebe im Kfz-Herstellungsbetrieb immer verfügbar ist und der Antrieb technisch einfach und betriebssicher ist. Zudem wird das Halteelement mit seiner Anlagefläche schnell gegen das Kraftfahrzeugteil gefahren, wobei durch den vorgegebenen Beaufschlagungsdruck des pneumatischen Antriebszylinders eine maximale Andruckkraft derart einstellbar ist, dass das Kraftfahrzeugteil zwar sicher gehalten wird, aber andererseits nicht beschädigt wird. Eine definierte maximale Kraftbeaufschlagung ist zudem über ein vor dem Antriebszylinder angeordnetes Druckminderungsventil einstellbar. Hierdurch wird auch vermieden, dass das Kraftfahrzeugteil durch eine zuerst auftreffende Anlagefläche in Querrichtung z ausgelenkt würde.

Vorzugsweise ist die Bearbeitungsmaschine eine Aufbringvorrichtung zum Aufbringen eines Dichtungsprofils auf ein Kraftfahrzeugteil, welches eine umlaufende Dichtfläche und eine über die Dichtfläche hinausstehende Kante aufweist. Die Aufbringvorrichtung weist dann einen Roboter auf, der wenigstens einen bewegbaren Roboterarm und einen Aufbringkopf zum Aufbringen des Dichtungsprofils auf die Dichtfläche des Kraftfahrzeugteils aufweist, wobei der Roboter zwischen den Tragstreben angeordnet ist. Die Haltevorrichtung ermöglicht somit eine sehr bevorzugte Anordnung des Roboters direkt vor der Dichtfläche des Kraftfahrzeugteils. Die Greifer sind hierbei vorzugsweise derart ausgebildet, dass sie die über die Dichtfläche hinausstehende Kante des Kraftfahrzeugteils greifen.

In einer vorteilhaften Ausführungsform der Erfindung ist wenigstens einer - vorzugsweise jeder - Greifer mit einem in Bewegungsrichtung x längenverstellbaren Betätigungsarm an der zugehörigen Tragstrebe gehalten. Auf diese Weise muss nicht der gesamte Einspannweg durch die Bewegung der Halteelemente realisiert werden, sondern der Greifer kann vorjustiert werden, so dass die Einspannung des Kraftfahrzeugteils dann lediglich noch durch die Verfahrung der Halteelemente des Greifers erfolgt. Durch die Längenjustierung der Betätigungsarme können die Greifer für unterschiedlich große Kraftfahrzeugteile vorjustiert werden.

In einer vorteilhaften Weiterbildung der Erfindung ist wenigstens einer - vorzugsweise jeder - Greifer mit einem rotierbaren Betätigungsarm an der zugehörigen Tragstrebe gehalten. Auf diese Weise kann durch einen Greifer auch ein Kraftfahrzeugteil an einer Kante gegriffen werden, die nicht exakt parallel zur Tragstrebe des Greifers verläuft, sondern schräg dazu orientiert ist.

Vorzugsweise ist wenigstens einer der Greifer - vorzugsweise jeder Greifer - einer Tragstrebe, insbesondere jeder Greifer jeder Tragstrebe, mittels einer Linearführung parallel zur korrespondierenden Tragstrebe verfahrbar. Auf diese Weise können die Greifer zum Greifen sehr unterschiedlich geformter Kraftfahrzeugteile mit unterschiedlichen Abmessungen relativ zueinander angeordnet werden.

Vorzugsweise sind die Tragstreben durch die gegenüberliegenden Streben eines Tragrahmens gebildet. Eine derartige Konstruktion der Haltevorrichtung hat eine größere Stabilität als separate Tragstreben und ist in der Lage, auch schwerere Kraftfahrzeugteile, wie zum Beispiel Kraftfahrzeugtüren, zu tragen.

Es ist anzumerken, dass es nicht unbedingt notwendig ist, dass alle Greifer in der erfinderischen Weise ausgebildet sind. Vorzugsweise sind jedoch alle Greifer zumindest einer Tragstrebe in dieser Weise ausgebildet, vorzugsweise alle Greifer beider Tragstreben. Auf diese Weise wird eine maximale Toleranz gegenüber einer leichten Verkippung oder auch einer translatorischen Fehlausrichtung des Kraftfahrzeugteils zwischen den beiden Tragstreben kompensiert.

Die Aufnahmeflächen können plan sein, so dass sich ein V-förmiger Aufnahmebereich ergibt, oder gebogen, so dass sich ein konkaver oder anders geformter gerundeter Aufnahmebereich ergibt. Der Aufnahmebereich kann so auch die Form eines Polygon haben.

Folgende Begriffe werden synonym verwendet: Aufnahmebereich - Haltebereich;

### Kurze Beschreibung der Zeichnungen

Die Erfindung wird nachfolgend beispielsweise anhand der schematischen Zeichnung beschrieben. In dieser zeigen:
- Fig. 1: eine Seitenansicht einer erfindungsgemäßen Bearbeitungsvorrichtung zum Aufbringen eines Dichtungsprofils auf eine Kraftfahrzeugtüre,
- Fig. 2: eine schematische Seitenansicht auf einen Greifer der Haltevorrichtung aus Fig. 1, der eine Kante des Kraftfahrzeugteils greift,
- Fig. 3: eine Frontaufsicht auf einen Greifer nach Fig. 2 aus der Richtung des Kraftfahrzeugteils gesehen, welcher Greifer jedoch drei Halteelemente aufweist,
- Fig. 4: eine weitere technisch realisierte Ausführungsform eines Greifers der Bearbeitungsvorrichtung nach Fig. 1,
- Fig. 5: eine schematische Darstellung der Halteelemente des Greifers aus Fig. 4,
- Fig. 6: eine Seitenansicht der Halteelemente des Greifers aus Fig. 4,
- Fig. 7: eine Seitenansicht auf eine alternative Ausbildung eines Greifers mit monolithischen Halteelementen,
- Fig. 7A, 7B: Vergleichsdarstellungen gemäß Fig. 7 zur Darstellung der Fehlertoleranz des Greifers aus Fig. 7 bei einem Kraftfahrzeugteil, das in Querrichtung z in extremen Positionen angeordnet ist, und
- Fig. 8, 9: zwei weitere Ausführungsformen von Halteelementen.

### Wege zur Ausführung der Erfindung

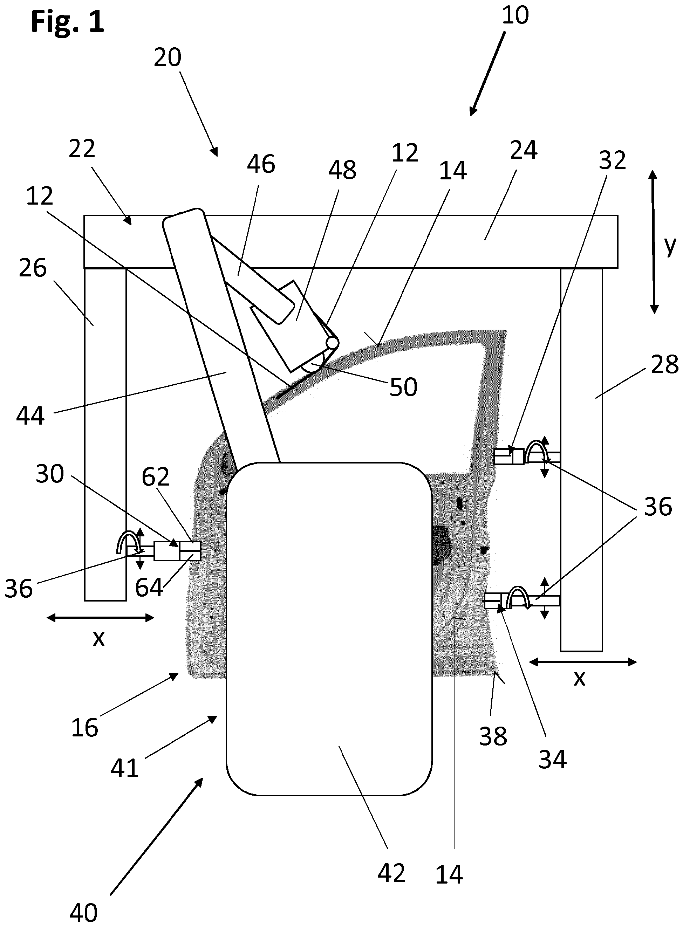

Fig. 1 zeigt eine Bearbeitungsvorrichtung 10 zum Aufbringen eines Dichtungsprofils 12 auf eine umlaufende Dichtfläche 14 eines Kraftfahrzeugteils 16, in diesem Beispiel einer Kraftfahrzeugtür. Die Bearbeitungsvorrichtung 10 enthält hierfür eine Haltevorrichtung 20 mit einem Halterahmen 22, der aus einer Horizontalstrebe 24 besteht, an welcher zwei vertikale Tragstreben 26, 28 in einem in Bewegungsrichtung x zueinander verstellbaren Abstand gehalten sind.

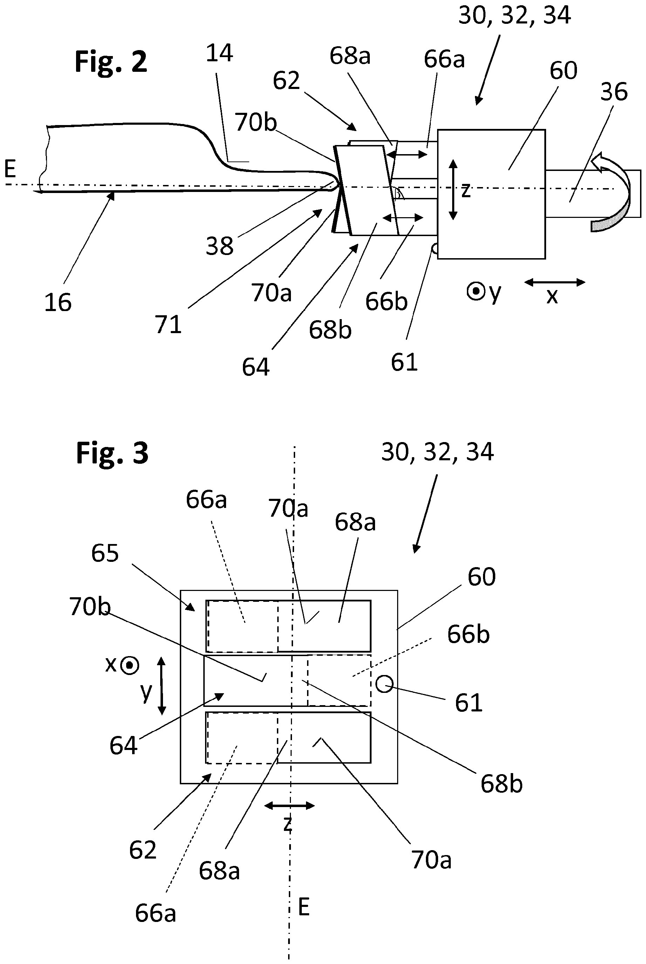

Der Halterahmen 22 kann von einer nicht dargestellten Transport- oder Förderanordnung zwischen einem Kraftfahrzeugteilelager, einer Aufbringposition und einem zweiten Lager für bearbeitete Kraftfahrzeugteile bewegt werden. An der ersten Tragstrebe 26 ist ein erster Greifer 30 angeordnet und an der zweiten Tragstrebe 28 sind zwei weitere Greifer, das heißt ein zweiter Greifer 32 und ein dritter Greifer 34 angeordnet. Die vertikale Position jedes Greifers 30, 32, 34 an den Tragstreben 26, 28 in Richtung y ist einstellbar. Jeder Greifer 30, 32, 34 ist über einen entsprechenden Betätigungsarm 36 und einen zugeordneten nicht dargestellten Stellmechanismus sowohl in seinem Abstand von der Tragstrebe 26, 28 als auch um seine Längsachse rotierbar gehalten. Das Kraftfahrzeugteil 12 hat neben der umlaufenden Dichtfläche eine umlaufende Kante 38, die von den drei Greifern 30, 32, 34 gegriffen wird. Wie dieses Greifen der Kante 38 durch den Greifer erfolgt, ist näher in den nachstehenden Fig. 2 bis 7b dargestellt. Fig. 2 zeigt beispielsweise den ersten Greifer 30, wobei alle drei Greifer 30, 32, 34 vorzugsweise identisch ausgebildet sein können.

Zur vereinfachten Darstellung wird für alle Figuren ein übereinstimmendes Koordinatensystem verwendet mit folgenden Bezeichnungen:
x bezeichnet die Bewegungsrichtung der Halteelemente 62, 64, 65 eines Greifers 30, 32, 34 als auch der Greifer 30, 32, 34 selbst am Betätigungsarm 36 als auch die Bewegungsrichtung zur Einstellung des Abstandes der vertikalen Tragstreben 26, 28 zueinander, d.h. horizontal und in der Ebene des Halterahmens 22.
y bezeichnet die vertikale Richtung, die der Richtung der Abfolge der Halteelemente 62, 64, 65 eines Greifers entspricht.
z bezeichnet die horizontale Richtung quer zur Ebene des Halterahmens 20 (nachfolgend auch als Querrichtung bezeichnet), und damit die Aufnahmetoleranz b des Aufnahmebereichs eines Greifers 30, 32, 34.

Die Bearbeitungsvorrichtung 10 umfasst des Weiteren eine Aufbringvorrichtung 40 umfassend einen Roboter 41, der vor dem Halterahmen 22 an der Seite der umlaufenden Dichtfläche 14 des Kraftfahrzeugteils 16 angeordnet ist. Der Roboter 41 enthält einen um eine vertikale Achse rotierbaren - und eventuell verfahrbaren - Basiskörper 42, an welchem schwenkbar ein erster Roboterarm 44 angeordnet ist, an dessen freiem Ende wiederum ein zweiter Roboterarm 46 schwenkbar angeordnet ist, an dessen freiem Ende ein Aufbringkopf 48 vorzugsweise schwenkbar und/oder um eine Achse rotierbar gehalten ist, der in sich bekannter Weise, z.B. über eine Andruckrolle 50 ein Dichtungsprofil 12 auf die umlaufende Dichtfläche 14 des Kraftfahrzeugteils 16 aufdrückt. Das Aufbringen erfolgt in dem Aufbringkopf oft, aber nicht notwendigerweise, über die Andruckrolle 50. Das Dichtungsprofil 12 weist in der Regel einen Liner auf, der eine Klebefläche abdeckt. Der Liner wird vor dem Aufbringen abgezogen wird, so dass mit dem Aufdrücken des Dichtungsprofils 12 auf die Dichtfläche 14 mittels der Andruckrolle 50 das Dichtungsprofil 12 sicher auf der Dichtfläche 14 des Kraftfahrzeugteils 16 festgeklebt wird.

Die Greifer 30, 32, 34 können vorzugsweise an ihrer Vorderseite jeweils einen Näherungssensor 61 aufweisen, womit der Basisabstand jedes Greifers 30, 32, 34 zum Kraftfahrzeugteil 16 mittels des Betätigungsarm 36 voreingestellt werden kann.

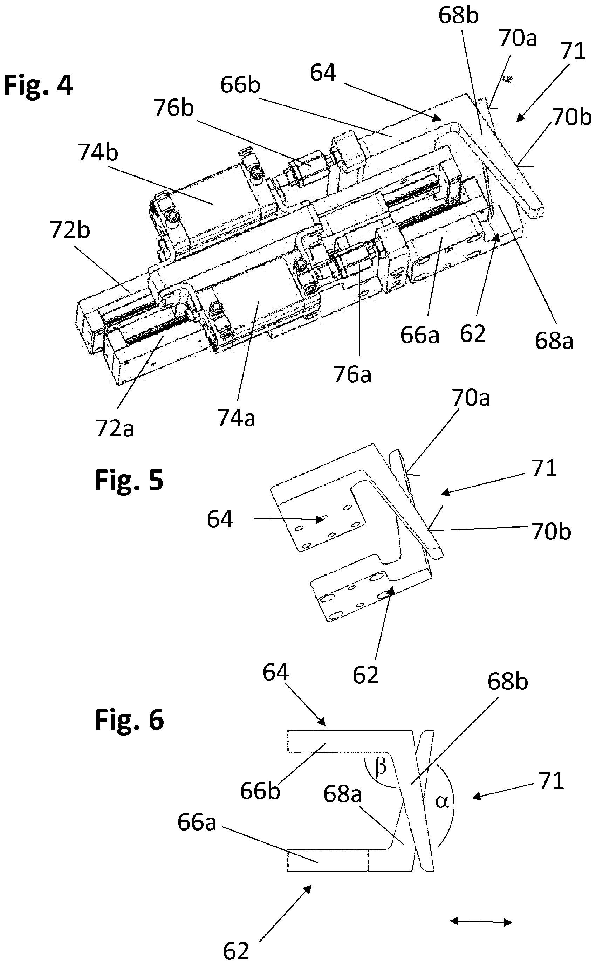

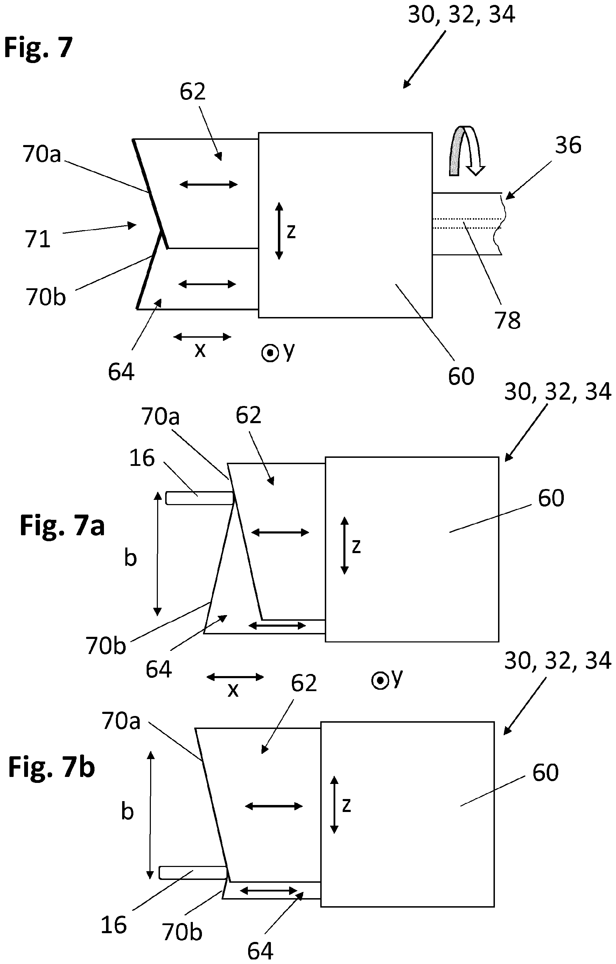

Fig. 2 zeigt die in Fig. 1 dargestellten Greifer 30, 32, 34 detaillierter. Jeder Greifer 30, 32, 34 enthält optional ein Greifergehäuse 60 - oder eine ähnliche Haltestruktur -, welches an dem Betätigungsarm 36 längenverstellbar und rotierbar gehalten ist. In dem Gehäuse 60 sind zwei Halteelemente 62, 64 angeordnet, die über eine eigene in dem Greifergehäuse 60 angeordnete Antriebseinrichtung (siehe Fig. 4) unabhängig voneinander in Bewegungsrichtung x verfahrbar sind. Jedes Halteelement 62, 64 besteht aus einem länglichen Basisteil 66a,b, welches in dem Greifergehäuse 60 mittels einer Linearführung geführt und mittels der Antriebseinheit angetrieben ist. Nach vorne, das heißt zum Kraftfahrzeugteil 16 hin schließt sich an jeden Basisabschnitt 66a, 66b ein schräg verlaufender Halteabschnitt 68a, 68b an. Der Winkel β zwischen dem schrägen Halteabschnitt 68a,b und dem Basisabschnitt 66a,b beträgt vorzugsweise zwischen 110 und 150 Grad. An der Vorderseite jedes Halteabschnitts ist eine Anlagefläche 70a, 70b gebildet, die konzipiert ist, gegen die umlaufende Kante 38 des Kraftfahrzeugteils 16 anzuliegen. Die beiden Anlageflächen 70a,b bilden einen V-förmigen Aufnahmebereich 71 für die Seitenkante 38 des Kraftfahrzeugteils 16. Auf diese Weise liegt die Dichtungsfläche 14 des Kraftfahrzeugteils frei und zugänglich für die Aufbringvorrichtung 40. Vorzugsweise sind die Antriebseinheiten 74a, 74b (Fig. 4) für die beiden Halteelemente 62, 64 pneumatische Antriebszylinder, so dass die Anlageflächen 70a,b mit einer definierten maximalen Kraft gegen die Kante 38 des Kraftfahrzeugteils 16 anliegen. Wenn die Kante 38 nicht mittig gegen die beiden Anlageflächen 70a,b anliegt, wie das in Fig. 2 gezeigt ist, sondern nicht mittig, wie das in den Fig. 7A und 7B gezeigt ist, fährt in der Regel eine der Anlageflächen, das heißt ein Halteelement, zuerst gegen die Kante 38 des Kraftfahrzeugteils. Es ist daher vorteilhaft, wenn die Anlagefläche 70a, 70b gummiert, vielleicht sogar zusätzlich mit einer Querriffelung versehen ist, so dass, wenn zuerst eine schräge Anlagefläche 70a, 70b gegen die Kante 38 fährt, diese nicht in Querrichtung z ausgelenkt wird.

Fig. 3 zeigt eine Aufsicht auf den Greifer 30, 32, 34 gemäß Fig. 2, hier allerdings mit drei Halteelementen 62, 64, 65, deren Anlageflächen 70a und 70b gemäß Fig. 2 schräg und gegensinnig zueinander geneigt sind. Die beiden äußeren Halteelemente 62, 65 haben Anlegeflächen 70a mit derselben Ausrichtung. Dazwischen befindet sich die Anlagefläche 70b des Halteelements 64 mit gegensinniger Ausrichtung. Wenn die beiden äußeren Halteelemente 62, 65 separat voneinander verfahrbar sind, ist es möglich, dass auch etwas abgerundete Seitenkanten gegriffen werden, das heißt Seitenkanten, die in Richtung y nicht parallel zur korrespondierenden Tragstrebe 26, 28 des zugehörigen Greifers 30, 32, 34 verlaufen, so dass zum Beispiel die Anlagefläche 70a des ersten Halteelements 62 weniger oder mehr ausgelenkt sein kann als die Anlagefläche 70a des dritten Halteelements. Falls so etwas nicht vorkommt, ist es in der Ausführungsform der Fig. 3 auch möglich, das erste und dritte Halteelement 62, 65 mechanisch miteinander zu verbinden, so dass diese nur gemeinsam ausgelenkt werden können. Es können selbstverständlich mehr als zwei oder drei Halteelemente hintereinander angeordnet werden, in welchem Fall die Seitenkante 38 des Kraftfahrzeugteils in Richtung y über einen längeren Abschnitt gegriffen wird.

Fig. 4 zeigt eine Ausführungsform der Greifer 30, 32, 34 ohne Greifergehäuse, wobei in dieser Abbildung die Linearführungen 72a,b für die Halteelemente 62, 64 und die Pneumatikzylinder 74a,b dargestellt sind, welche die Antriebseinrichtung bilden. Die Pneumatikzylinder 74a,b sind über Dämpfer 76a,b mit den Halteelementen 62, 64 verbunden, so dass diese sanft gegen die Seitenkante 38 des Kraftfahrzeugteils 16 fahren können und damit an der Seitenkante 38 keine Beschädigungen hervorrufen. Die Halteabschnitte 68a,b stehen hier schräg nach vorne von den zugehörigen Basisabschnitten 66a,b weg.

Fig. 5 zeigt die Halteelemente 62, 64 des Greifers aus Fig. 4, die als separate Teile ausgebildet und mit den Linearführungen 72a,b verschraubbar sind. Fig. 6 zeigt die Halteelemente 62, 64 in Seitenansicht.

Fig. 7 zeigt einen Greifer 30, 32, 34, der weitgehend identisch zu Fig. 2 ausgebildet ist. Die Halteelemente 62, 64 sind hier jedoch als massive Teile ausgebildet, die keine strukturell unterschiedlichen Basisabschnitte und Halteabschnitte aufweisen, wie das in Fig. 2 der Fall ist. Zudem ist hier die Druckluftleitung 78 in dem Betätigungsarm 36 dargestellt, welcher Druckluftleitung 78 mit den beiden pneumatischen Antriebszylindern 74a,b (nicht dargestellt) verbunden sind, die in dem Greifergehäuse 60 angeordnet sind. Die Anlageflächen 70a, 70b der beiden Halteteile 62, 64 sind gummiert und leicht quergeriffelt, das heißt geriffelt in Richtung der Abfolge der Halteelemente y.

Die Anlageflächen 70a,b der Greifer sind vorzugsweise in Form planer oder gebogener oder geknickter rechteckiger Flächen mit Längserstreckung in Querrichtung z ausgebildet.

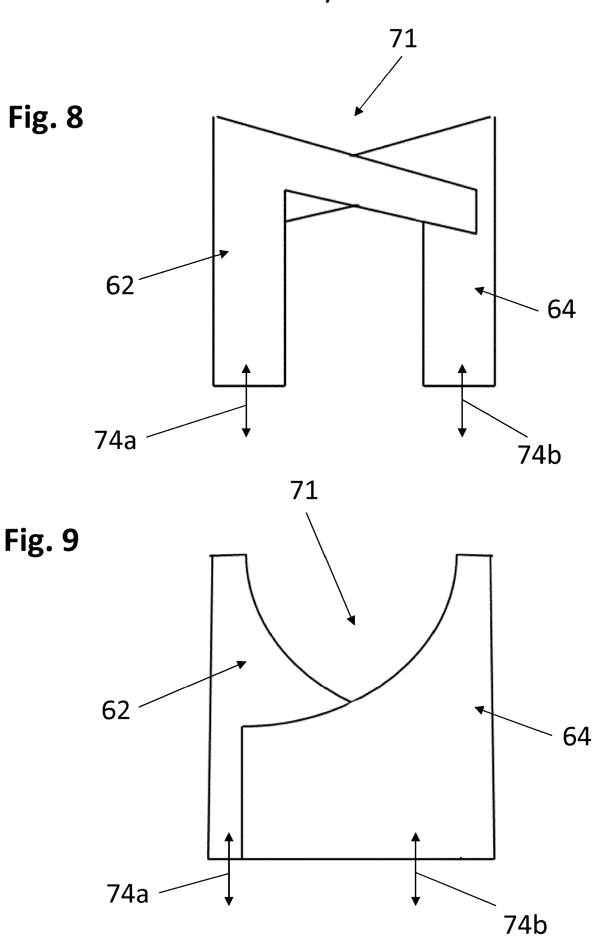

Die Figuren 8 und 9 zeigen alternative Anlageflächen von Halteelementen. In Fig. 8 sind die Halteabschnitte 68a,b relativ zu den zugehörigen Basisabschnitten 66a,b schräg nach hinten geneigt (im Gegensatz zu Fig. 4).

Fig.9 zeigt Halteelemente 62, 64 mit konkaven Aufnahmeflächen 70a,b.

Die Erfindung ist nicht auf die dargestellten Ausführungsformen beschränkt, sondern kann innerhalb des Schutzbereichs der beigefügten Ansprüche variiert werden.

### Bezugszeichenliste

- 10: Bearbeitungsvorrichtung
- 12: Dichtungsprofil - Gummiprofil
- 14: Dichtfläche
- 16: Kraftfahrzeugteil
- 20: Haltevorrichtung
- 22: Tragrahmen
- 24: Horizontalstrebe
- 26: erste vertikale Tragstrebe
- 28: zweite vertikale Tragstrebe
- 30: erster Greifer
- 32: zweiter Greifer
- 34: dritter Greifer
- 36: Betätigungsarm
- 38: umlaufende Kante des Kraftfahrzeugteils
- 40: Aufbringvorrichtung
- 41: Roboter
- 42: Basiskörper des Roboters
- 44: erster Roboterarm
- 46: zweiter Roboterarm
- 48: Aufbringkopf
- 50: Andruckrolle
- 60: Greifergehäuse
- 61: Näherungssensor
- 62: erstes Halteelement
- 64: zweites Halteelement
- 65: drittes Halteelement
- 66a,b: Basisabschnitt
- 68a,b: Halteabschnitt
- 70a,b: Anlagefläche
- 71: Aufnahmebereich
- 72a,b: Linearführung
- 74a,b: Antriebseinheit - Pneumatikzylinder
- 76a,b: Dämpfer
- 78: Druckluftleitung im Betätigungsarm
- x: Betätigungsrichtung, in der Regel horizontal
- y: Richtung der Abfolge der Anlageflächen, in der Regel vertikal
- b: Fehlertoleranz des Aufnahmebereichs in Querrichtung z
- z: Querrichtung, in der Regel horizontal quer zur Ebene des Tragrahmens
- α: Winkel zwischen benachbarten Anlageflächen
- β: Winkel zwischen der Betätigungsrichtung und der Anlagefläche

## Patentansprüche

1. Bearbeitungsvorrichtung (10) zum Bearbeiten eines Kraftfahrzeugteils (16), umfassend eine Haltevorrichtung (20), die wenigstens zwei voneinander beabstandete Tragstreben (26, 28) enthält, an denen jeweils wenigstens ein Greifer (30, 32, 34) montiert ist, wobei die Greifer (30, 32, 34) der beiden Tragstreben (26, 28) aufeinander zu weisen, um zwischen sich ein Kraftfahrzeugteil (16) zu halten, welche Bearbeitungsvorrichtung weiterhin wenigstens eine zwischen den Tragstreben (26, 28) angeordnete Bearbeitungsmaschine zum Bearbeiten des Kraftfahrzeugteils (16) aufweist, **dadurch gekennzeichnet, dass** in der Haltevorrichtung (20) wenigstens einer der Greifer (30, 32, 34) wenigstens zwei entlang einer Bewegungsrichtung (x) unabhängig voneinander bewegbare Halteelemente (62, 64, 65) aufweist, die jeweils eine schräg zur Bewegungsrichtung (x) verlaufende Anlagefläche (70a, 70b) zur Anlage gegen das Kraftfahrzeugteil (16) aufweisen, wobei die Anlageflächen benachbarter Halteelemente (62, 64, 65) nebeneinander angeordnet und gegensinnig orientiert sind, derart dass zwischen den Anlageflächen benachbarter Halteelemente ein V-förmiger oder konkaver Aufnahmebereich (71) gebildet wird, und wobei jeder Greifer (30, 32, 34) wenigstens zwei Antriebseinheiten (74a, 74b) zum voneinander unabhängigen Bewegen der nebeneinander angeordneten Halteelemente (62, 64, 65) in Bewegungsrichtung (x) aufweist, und wobei jede Antriebseinheit (74a, 74b) derart ausgebildet bzw. steuerbar ist, dass die Halteelemente (62, 64, 65) mittels der Anlageflächen (70a, 70b) mit einer definierten maximalen Kraft gegen das Kraftfahrzeugteil (16) andrückbar sind.

2. Bearbeitungsvorrichtung (10) nach Anspruch 1, **dadurch gekennzeichnet, dass** jedes Halteelement (62, 64, 65) einen Basisabschnitt (66a, 66b) zur Verbindung mit der zugehörigen Antriebseinheit (74a, 74b) und einer Linearführung (72a, 72b) sowie einen an dem Basisabschnitt (66a, 66b) anschließenden schräg zum Basisabschnitt (66a, 66b) verlaufenden Halteabschnitt (68a, 68b) aufweist, auf welchem die Anlagefläche (70a, 70b) angeordnet ist.

3. Bearbeitungsvorrichtung (10) nach einem der vorhergehenden Ansprüche, **dadurch gekennzeichnet, dass** der Winkel α zwischen den Anlageflächen (70a, 70b) benachbarter Halteelemente (62, 64, 65) 45 bis 160 Grad, vorzugsweise 100 bis 150 Grad beträgt.

4. Bearbeitungsvorrichtung (10) nach einem der vorhergehenden Ansprüche, **dadurch gekennzeichnet, dass** die gegensinnige Orientierung der benachbarten Anlageflächen (70a, 70b) realisiert ist, indem sie an einer Ebene (E) gespiegelt sind, die durch die Bewegungsrichtung (x) und die Richtung (y) der Abfolge der Anlageflächen (70a, 70b) aufgespannt wird.

5. Bearbeitungsvorrichtung (10) nach einem der vorhergehenden Ansprüche, **dadurch gekennzeichnet, dass** die Anlageflächen (70a, 70b) der Halteelemente (62, 64, 65) gummiert sind.

6. Bearbeitungsvorrichtung (10) nach einem der vorhergehenden Ansprüche, **dadurch gekennzeichnet, dass** die Anlageflächen (70a, 70b) der Halteelemente (62, 64, 65) eine Querriffelung aufweisen.

7. Bearbeitungsvorrichtung (10) nach einem der vorhergehenden Ansprüche, **dadurch gekennzeichnet, dass** die Antriebseinheit des Halteelements (62, 64, 65) einen pneumatischen Antriebszylinder enthält.

8. Bearbeitungsvorrichtung (10) nach einem der vorhergehenden Ansprüche, in welcher die Bearbeitungsmaschine eine Aufbringvorrichtung zum Aufbringen eines Dichtungsprofils auf ein Kraftfahrzeugteil (16) ist, welches eine umlaufende Dichtfläche (14) und eine über die Dichtfläche (14) hinausstehende Kante (38) aufweist, welche Aufbringvorrichtung (40) einen Roboter (42) aufweist, der wenigstens einen bewegbaren Roboterarm (44, 46) und einen Aufbringkopf (48) zum Aufbringen des Dichtungsprofils auf die Dichtfläche (14) des Kraftfahrzeugteils (16) aufweist, wobei der Roboter (42) zwischen den Tragstreben (26, 28) angeordnet ist.

9. Bearbeitungsvorrichtung (10) nach Anspruch 8, **dadurch gekennzeichnet, dass** die Greifer (30, 32, 34) ausgebildet sind, die über die Dichtfläche (14) des Kraftfahrzeugteils (16) hinausstehende Kante (38) zu greifen.

10. Bearbeitungsvorrichtung (10) nach einem der vorhergehenden Ansprüche, **dadurch gekennzeichnet, dass** wenigstens einer, vorzugsweise jeder Greifer (30, 32, 34) mit einem längenverstellbaren Betätigungsarm (36) an der zugehörigen Tragstrebe (26, 28) gehalten ist.

11. Bearbeitungsvorrichtung (10) nach einem der vorhergehenden Ansprüche, **dadurch gekennzeichnet, dass** wenigstens einer, vorzugsweise jeder Greifer (30, 32, 34) mit einem rotierbaren Betätigungsarm (36) an der zugehörigen Tragstrebe (26, 28) gehalten ist.

12. Bearbeitungsvorrichtung (10) nach einem der vorhergehenden Ansprüche, **dadurch gekennzeichnet, dass** wenigstens einer der Greifer (30, 32, 34), vorzugsweise jeder Greifer (30, 32, 34) an einer Linearführung (72a, 72b) parallel zur korrespondierenden Tragstrebe (26, 28) verfahrbar ist.

13. Bearbeitungsvorrichtung (10) nach einem der vorhergehenden Ansprüche, **dadurch gekennzeichnet, dass** die Tragstreben (26, 28) durch die gegenüberliegenden Streben eines Tragrahmens (21) gebildet sind.

14. Bearbeitungsvorrichtung (10) nach einem der vorhergehenden Ansprüche, **dadurch gekennzeichnet, dass** alle Greifer (30, 32, 34) zumindest einer Tragstrebe (26, 28), vorzugsweise beider Tragstreben (26, 28) gemäß Anspruch 1 ausgebildet sind.

## Claims

1. Processing device (10) for machining a motor vehicle part (16), comprising a holding device (20) which includes at least two spaced-apart supporting struts (26, 28) on each of which at least one gripper (30, 32, 34) is mounted, the grippers (30, 32, 34) of the two supporting struts (26, 28) pointing towards one another in order to hold a motor vehicle part (16) between them, which processing device further comprises at least one processing machine arranged between the supporting struts (26, 28) for processing the motor vehicle part (16), **characterized in that** in the holding device (20) at least one of the grippers (30, 32, 34) has at least two holding elements (62, 64, 65) which can be moved independently of one another along a direction of movement (x) and which each have a bearing surface (70a, 70b), running obliquely with respect to the direction of movement (x), for bearing against the motor vehicle part (16), the bearing surfaces of adjacent holding elements (62, 64, 65) being arranged next to one another and oriented in opposite directions, in such a way that a V-shaped or concave receiving region (71) is formed between the bearing surfaces of adjacent retaining elements, and each gripper (30, 32, 34) having at least two drive units (74a, 74b) for moving the retaining elements (62, 64, 65) arranged next to one another in the direction of movement (x) independently of one another, and each drive unit (74a, 74b) being designed or controllable in such a way that the holding elements (62, 64, 65) can be moved in the direction of movement (x) independently of one another, that the holding elements (62, 64, 65) can be pressed against the motor vehicle part (16) with a defined maximum force by means of the contact surfaces (70a, 70b).

2. Processing device (10) according to claim 1, **characterised in that** each holding element (62, 64, 65) has a base section (66a, 66b) for connection to the associated drive unit (74a, 74b) and a linear guide (72a, 72b) as well as a holding section (68a, 68b) adjoining the base section (66a, 66b) and extending obliquely to the base section (66a, 66b), on which holding section (68a, 68b) the contact surface (70a, 70b) is arranged.

3. Processing device (10) according to one of the preceding claims, **characterized in that** the angle α between the contact surfaces (70a, 70b) of adjacent holding elements (62, 64, 65) is 45 to 160 degrees, preferably 100 to 150 degrees.

4. Processing device (10) according to one of the preceding claims, **characterised in that** the opposite orientation of the adjacent contact surfaces (70a, 70b) is realised **in that** they are mirrored on a plane (E) which is defined by the direction of movement (x) and the direction (y) of the sequence of the contact surfaces (70a, 70b).

5. Processing device (10) according to one of the preceding claims, **characterised in that** the contact surfaces (70a, 70b) of the holding elements (62, 64, 65) are rubberised.

6. Processing device (10) according to one of the preceding claims, **characterised in that** the contact surfaces (70a, 70b) of the retaining elements (62, 64, 65) have transverse corrugation.

7. Processing device (10) according to one of the preceding claims, **characterized in that** the drive unit of the holding element (62, 64, 65) comprises a pneumatic drive cylinder.

8. Processing device (10) according to one of the preceding claims, in which the processing machine is an application device for applying a sealing profile to a motor vehicle part (16) which has a circumferential sealing surface (14) and an edge (38) projecting beyond the sealing surface (14), which application device (40) has a robot (42) which has at least one movable robot arm (44, 46) and an application head (48) for applying the sealing profile to the sealing surface (14) of the motor vehicle part (16), the robot (42) being arranged between the supporting struts (26, 28).

9. Processing device (10) according to claim 8, **characterised in that** the grippers (30, 32, 34) are designed to grip the edge (38) projecting beyond the sealing surface (14) of the motor vehicle part (16).

10. Processing device (10) according to one of the preceding claims, **characterised in that** at least one, preferably each, gripper (30, 32, 34) is held on the associated supporting strut (26, 28) by a longitudinally adjustable actuating arm (36).

11. Processing device (10) according to one of the preceding claims, **characterised in that** at least one, preferably each, gripper (30, 32, 34) is held on the associated supporting strut (26, 28) by a rotatable actuating arm (36).

12. Processing device (10) according to one of the preceding claims, **characterised in that** at least one of the grippers (30, 32, 34), preferably each gripper (30, 32, 34), is movable on a linear guide (72a, 72b) parallel to the corresponding supporting strut (26, 28).

13. Processing device (10) according to one of the preceding claims, **characterized in that** the supporting struts (26, 28) are formed by the opposite struts of a supporting frame (21).

14. Processing device (10) according to one of the preceding claims, **characterized in that** all grippers (30, 32, 34) of at least one supporting strut (26, 28), preferably of both supporting struts (26, 28) are formed according to claim 1.

## Revendications

1. Dispositif d'usinage (10) pour usiner une pièce de véhicule automobile (16), comprenant un dispositif de maintien (20) qui comprend au moins deux montants de support (26, 28) espacés l'un de l'autre, sur chacun desquels est montée au moins une pince (30, 32, 34), les pinces (30, 32, 34) des deux montants de support (26, 28) étant tournées l'une vers l'autre pour maintenir entre elles une pièce de véhicule automobile (16), lequel dispositif d'usinage présente en outre au moins une machine d'usinage disposée entre les entretoises de support (26, 28) pour usiner la pièce de véhicule automobile (16), **caractérisé en ce que**, dans le dispositif de maintien (20), au moins l'une des pinces (30, 32, 34) présente au moins deux éléments de maintien (62, 64, 65) qui peuvent être déplacés indépendamment l'un de l'autre suivant une direction de déplacement (x) et qui présentent chacun une surface d'appui (70a, 70b) s'étendant obliquement par rapport à la direction de déplacement (x) pour s'appuyer contre la pièce de véhicule automobile (16), les surfaces d'appui d'éléments de maintien adjacents (62, 64, 65) étant disposées l'une à côté de l'autre et orientées dans des directions opposées de telle sorte qu'une zone de réception (71) en forme de V ou concave est formée entre les surfaces d'appui d'éléments de maintien adjacents, et chaque pince (30, 32, 34) présentant au moins deux unités d'entraînement (74a, 74b) pour déplacer indépendamment l'un de l'autre les éléments de maintien (62, 64, 65) disposés l'un à côté de l'autre dans la direction de déplacement (x) et chaque unité d'entraînement (74a, 74b) étant conçue ou pouvant être commandée de telle sorte que les éléments de maintien (62, 64, 65) peuvent être pressés contre la pièce de véhicule automobile (16) avec une force maximale définie au moyen des surfaces d'appui (70a, 70b).

2. Dispositif d'usinage (10) selon la revendication 1, **caractérisé en ce que** chaque élément de maintien (62, 64, 65) présente une partie de base (66a, 66b) pour la liaison avec l'unité d'entraînement associée (74a, 74b) et un guide linéaire (72a, 72b) ainsi qu'une partie de maintien (68a, 68b), se raccordant à la partie de base (66a, 66b) et s'étendant obliquement par rapport à la partie de base (66a, 66b), sur laquelle est disposée la surface d'appui (70a, 70b).

3. Dispositif d'usinage (10) selon l'une des revendications précédentes, **caractérisé en ce que** l'angle α entre les surfaces d'appui (70a, 70b) d'éléments de maintien adjacents (62, 64, 65) est de 45 à 160 degrés, de préférence de 100 à 150 degrés.

4. Dispositif d'usinage (10) selon l'une des revendications précédentes, **caractérisé en ce que** l'orientation dans des directions opposées des surfaces d'appui adjacentes (70a, 70b) est réalisée par le fait qu'elles sont symétriques par rapport à un plan (E) qui est défini par la direction de déplacement (x) et la direction (y) de la succession des surfaces d'appui (70a, 70b).

5. Dispositif d'usinage (10) selon l'une des revendications précédentes, **caractérisé en ce que** les surfaces d'appui (70a, 70b) des éléments de maintien (62, 64, 65) sont caoutchoutées.

6. Dispositif d'usinage (10) selon l'une des revendications précédentes, **caractérisé en ce que** les surfaces d'appui (70a, 70b) des éléments de maintien (62, 64, 65) présentent une cannelure transversale.

7. Dispositif d'usinage (10) selon l'une des revendications précédentes, **caractérisé en ce que** l'unité d'entraînement de l'élément de maintien (62, 64, 65) comprend un vérin d'entraînement pneumatique.

8. Dispositif d'usinage (10) selon l'une des revendications précédentes, dans lequel la machine d'usinage est un dispositif d'application pour l'application d'un profilé d'étanchéité sur une pièce de véhicule automobile (16) qui présente une surface d'étanchéité périphérique (14) et un bord (38) dépassant de la surface d'étanchéité (14), lequel dispositif d'application (40) présente un robot (42) qui présente au moins un bras de robot mobile (44, 46) et une tête d'application (48) pour appliquer le profilé d'étanchéité sur la surface d'étanchéité (14) de la pièce de véhicule automobile (16), le robot (42) étant disposé entre les montants de support (26, 28).

9. Dispositif d'usinage (10) selon la revendication 8, **caractérisé en ce que** les pinces (30, 32, 34) sont conçues pour saisir le bord (38) dépassant de la surface d'étanchéité (14) de la pièce de véhicule automobile (16).

10. Dispositif d'usinage (10) selon l'une des revendications précédentes, **caractérisé en ce qu'**au moins une, de préférence chaque pince (30, 32, 34) est maintenue sur le montant de support associé (26, 28) par un bras d'actionnement réglable en longueur (36).

11. Dispositif d'usinage (10) selon l'une des revendications précédentes, **caractérisé en ce qu'**au moins une, de préférence chaque pince (30, 32, 34) est maintenue sur le montant de support associé (26, 28) par un bras d'actionnement rotatif (36).

12. Dispositif d'usinage (10) selon l'une des revendications précédentes, **caractérisé en ce qu'**au moins une des pinces (30, 32, 34), de préférence chaque pince (30, 32, 34) est déplaçable parallèlement au montant de support correspondant (26, 28) sur un guide linéaire (72a, 72b).

13. Dispositif d'usinage (10) selon l'une des revendications précédentes, **caractérisé en ce que** les montants de support (26, 28) sont formés par les montants opposés d'un cadre de support (21).

14. Dispositif d'usinage (10) selon l'une des revendications précédentes, **caractérisé en ce que** toutes les pinces (30, 32, 34) d'au moins un montant de support (26, 28), de préférence des deux montants de support (26, 28), sont réalisées selon la revendication 1.
